# EUROPÄISCHE PATENTSCHRIFT

(11) **EP 3 214 353 B1**
(45) Veröffentlichungstag und Bekanntmachung des Hinweises auf die Patenterteilung: **25.07.2018**
(21) Anmeldenummer: 16191581.4
(22) Anmeldetag: 29.09.2016
(51) Int. Cl.: F16L 55/115, F16L 9/18, F16L 45/00, F23J 13/04, F23J 13/08

(54) **ROHREINHEIT ZUR LUFTVERSORGUNG SOWIE ABFÜHRUNG VON ABGASEN VON VERBRENNUNGSEINRICHTUNGEN**
TUBE UNIT FOR THE AIR SUPPLY AS WELL AS FOR THE DISCHARGE OF EXHAUST FUMES OF COMBUSTION EQUIPMENT
UNITE DE TUYAU POUR L'AERATION AUSSI QUE L'EXTRACTION DES GAZ D'ECHAPPEMENT DES EQUIPMENTS DE COMBUSTION

(30) Priorität: 02.03.2016 DE 202016101125 U
(43) Veröffentlichungstag der Anmeldung: 06.09.2017
(73) Patentinhaber: Bächle, Dieter, 8595 Altnau (CH)
(72) Erfinder: Bächle, Dieter, 8595 Altnau (CH)
(74) Vertreter: Patentanwälte Behrmann Wagner PartG mbB

(56) Entgegenhaltungen:
- EP-A2- 1 318 352
- EP-A2- 1 329 661
- EP-A2- 2 581 637
- US-A1- 2015 184 784

## Beschreibung

Die Erfindung betrifft eine Rohreinheit gemäß dem Oberbegriff des Anspruchs 1, umfassend ein Abgasrohr aus Kunststoff zur Abführung von Verbrennungsgasen von einer Verbrennungseinrichtung, insbesondere von einer Gebäudeheizung, welches innerhalb eines Luftführungsrohres angeordnet ist, das zusammen mit dem Außenumfang des Abgasrohres einen Ringluftkanal zur Versorgung der Verbrennungseinrichtung mit Luft begrenzt, wobei mantelseitig in dem Luftführungsrohr eine Kontrollöffnung vorgesehen ist, die mit einem an einem die Kontrollöffnung umgebenden, radial (bezogen auf eine Rohreinheitslängserstreckungs- bzw. Gasströmungsrichtung) vorstehenden Verschlussstutzen (Montagestutzen) lösbar fixierten Verschlussdeckel aus Kunststoff verschlossen ist, der den Verschlussstutzen an seinem Außenumfang mit einem monolithisch mit einem geschlossenen Deckelabschnitt ausgebildeten und von diesem abkragenden Kragenabschnitt in Richtung Mantelfläche des Lüftungsrohres übergreift.

Ferner betrifft die Erfindung ein System gemäß Anspruch 10, umfassend eine Verbrennungseinrichtung, insbesondere eine Gebäudeheizung, sowie mindestens eine erfindungsgemäße Rohreinheit, die ausgebildet und angeordnet ist, um die Verbrennungseinrichtung mit Luft zu versorgen und Verbrennungsabgase abzuleiten.

In der EP 2 581 637 A2 des Anmelders ist eine Rohreinheit für Gebäudeheizungen beschrieben, die zwei ineinander angeordnete Rohre umfasst, nämlich ein inneres Abgasrohr zur Abführung von Abgasen und ein sich um das Abgasrohr herum erstreckendes Luftführungsrohr, welches zusammen mit dem Außenumfang des Abgasrohres einen Ringluftkanal zur Versorgung der Verbrennungseinrichtung mit Luft begrenzt. Mantelseitig befindet sich in dem Abgasrohr eine Kontrollöffnung, die von einem mehrteiligen Abgas-Verschlussdeckel abgasdicht verschlossen ist. Diese abgasrohrseitige Kontrollöffnung fluchtet in radialer Richtung mit einer Kontrollöffnung in der Mantelfläche des Luftführungsrohres. Diese Kontrollöffnung wird in der Praxis mit einem einteiligen Gewindedeckel verschlossen. Daher besteht das Problem, dass sich solche Gewindeverschlussdeckel nach einem längeren Zeitraum nach der Installation nur schwer öffnen lassen. Darüber hinaus besteht das Problem, dass für den Fall, dass ein luftdichtes Verschließen der Kontrollöffnung erwünscht wird eine hierfür vorgesehene Ringdichtung in der Regel mit zu hohem Anpressdruck beaufschlagt wird und dadurch nach einer gewissen Zeit ihre Dichtwirkung verlieren kann.

In der DE 10 2007 038 855 B4 des Anmelders ist ein Verschlussdeckel beschrieben, der über eine Bajonettverbindung mit einem Verschlussstutzen (Rohrstutzen) verbunden ist, wobei der Verschlussdeckel in den Stutzen eintaucht und eine Ringdichtung in einer äußeren Nut des in den Stutzen versenkbaren Deckelabschnitts aufgenommen ist, die mit dem Stutzeninnenumfang zusammenwirkt. Diese Ringdichtung wird beim axialen Einstecken in den Stutzen stark "gequält", da diese mit radialem Übermaß gefertigt sein muss, um die für die Dichtwirkung erforderliche Dichtungspressung zu erreichen.

Die DE 10 2014 108 563 B3 beschreibt ein Kunststoff-Abgasrohr, welches sich dadurch auszeichnet, dass im Bereich von zwischen Wellrohrabschnitten angeordneten Glattrohrabschnitten Bajonettverschlusselemente zum axialen Verbinden eines abgetrennten Abgasrohrabschnittes mit einem weiteren Abgasrohrabschnitt über ein Sicherungselement vorgesehen sind.

Auch die EP 2 762 761 A2 beschäftigt sich mit Bajonettelementen zum axialen Miteinanderverbinden von Abgasrohren.

Die DE 103 51 979 A1 beschreibt eine Rohreinheit zum Abführen von Abgasen aus einem Schornstein. Die bekannte Rohreinheit umfasst kein Luftführungsrohr. Dem Abgasrohr ist ein Abgasdeckel zugeordnet, der mittels einer zentralen Flügelschraube verschließbar ist. Beschrieben sind teilweise komplex aufgebaute Deckelkonstruktionen, denen gemeinsam ist, dass der Deckel in einen, in einem Aufnahmestutzen für den Deckel ausgebildeten Dichtsitz gepresst wird. Der Deckel selbst muss zum Lösen nicht verdreht werden.

Ausgehend von dem vorgenannten Stand der Technik liegt der Erfindung die Aufgabe zugrunde, eine Rohreinheit zur Luftversorgung von Verbrennungseinrichtungen, insbesondere Gebäudeheizungen sowie zur Abgasabführung von dieser anzugeben, deren Kontrollöffnung im äußeren Luftführungsrohr sicher und einfach gasdicht verschließbar ist, wobei sichergestellt sein soll, dass sich zum einen der zur Anwendung kommende Verschlussdeckel auch nach Jahren einfach öffnen lässt und darüber hinaus die Luftdichtheit des Verschlusses über Jahre aufrechterhalten bleibt - insbesondere soll eine Überbeanspruchung der zur Anwendung kommenden Dichtung sicher vermieden werden. Ferner besteht die Aufgabe darin, mindestens eine solche Rohreinheit umfassendes (Verbrennungseinrichtungssystem), insbesondere Gebäudeheizungssystem anzugeben.

Diese Aufgabe wird hinsichtlich der Rohreinheit mit den Merkmalen des Anspruchs 1 gelöst, d.h. bei einer gattungsgemäßen Rohreinheit dadurch, dass zwischen dem Verschlussdeckel und dem Luftführungsrohr eine lösbare Bajonettverschlussverbindung realisiert ist, umfassend monolithisch mit dem Verschlussdeckel an einer Innenseite seines Kragenabschnittes ausgebildete und in Umfangsrichtung beabstandete Bajonettelemente, die diesen zugeordnete, monolithisch mit dem Luftführungsrohr an einer Außenseite des Verschlussstutzens ausgebildete Gegenbajonettelemente (in einer Aufsteckrichtung des Deckels auf den Verschluss- bzw. Montagestutzen) hintergreifen und dass radial zwischen der Innenseite des Kragenabschnittes und der Außenseite des Verschlussstutzens, bevorzugt entlang der Radialerstreckung des Verschlussstutzens (bezogen auf die Längserstreckung der Rohreinheit) zwischen der Bajonettverschlussverbindung und der Mantelfläche des Luftführungsrohres, eine Ringdichtung angeordnet ist, und dass der Kragenabschnitt eine Anlagefase zum Pressen der Ringdichtung aufweist. Die erfindungsgemäße Ausgestaltung der Rohreinheit, konkret der Verschlusssituation der Kontrollöffnung des Luftführungsrohres ermöglicht es, was erfindungsgemäß vorgesehen ist, die Ringdichtung als O-Ringdichtung auszubilden.

Vorteilhafte Weiterbildungen der Erfindung sind in den Unteransprüchen angegeben.

Der Erfindung liegt der Gedanke zugrunde, einen den Verschlussstutzen (Montagestutzen) außen in Richtung Mantelfläche des Luftführungsrohres mit einem von einer geschlossenen Deckelfläche zum Überdecken der Kontrollöffnung, bevorzugt senkrecht abkragenden, bevorzugt am Außenumfang zylindrischen Kragenabschnitt nicht wie bisher mit einer Gewindeverbindung am Verschlussstutzen festzulegen, sondern mit einer Bajonettverschlussverbindung, die sich in einem Bereich außerhalb des Verschlussstutzens befindet, also am Innenumfang des Kragenabschnitts angeordnete Bajonettelemente aufweist, die mit am Außenumfang des Verschlussstutzens angeordneten Gegenbajonettelementen in der Art eines Bajonettverschlusses zusammenwirken. Gleichzeitig wird erfindungsgemäß in dem Bereich zwischen der Innenseite des Kragenabschnittes und der Außenseite des Verschlussstutzens eine, bevorzugt als O-Ringdichtung ausgebildete Ringdichtung angeordnet, die zur dauerhaften luftdichten Abdichtung der Verbindung aus Verschlussdeckel und Verschlussstutzen dient. Die Kombination aus der Bajonettverschlussverbindung mit am Innenumfang des Verschlussstutzens außen übergreifenden Kragenabschnittes angeordneten Bajonettverschlusselementen mit einer ebenfalls am Innenumfang des Kragenabschnittes angeordneten Ringdichtung ermöglicht es den Verschlussdeckel auch nach langer Zeit mit überschaubarem Krafteinsatz wieder von dem Verschlussstutzen lösen zu können und ermöglicht es zudem die Ringdichtung definiert, d.h. vor allem nicht übermäßig zu pressen und somit eine langfristige Dichtwirkung sicherzustellen. Hierdurch ist es auch möglich, ohne die Nachteile einer geringeren Dichtwirkung in Kauf nehmen zu müssen, eine O-Ringdichtung anstelle einer Lippendichtung einzusetzen.

Erfindungsgemäß ist vorgesehen, dass an der als O-Ringdichtung ausgebildeten Ringdichtung eine am Innenumfang des Kragenabschnittes bzw. an dem der Mantelfläche des Luftführungsrohres zugewandten freien Endabschnitt des Kragenabschnittes eine Anlagefase für die Ringdichtung vorsieht, um mit dieser die Ringdichtung in radialer Richtung gegen den Nutboden der Ringnut pressen zu können. Durch das Vorsehen der Fase können in der Praxis vorkommende Dickenschwankungen der als O-Ringdichtung ausgebildeten Ringdichtung ausgeglichen werden, zumal der die Anlagefase tragende Verschlussdeckel aufgrund seines vergleichsweise großen Durchmessers eine gewisse Elastizität in radialer Richtung aufweist, wodurch zusätzlich wiederum Rundheitsschwankungen am Verschlussstutzen, wie diese bei den für Luftführungsrohren notwendigen großen Kontrollöffnungen herstellungsbedingt zwangsweise auftreten, gut ausgeglichen werden können. Zudem reduzieren sich die notwendigen Lösekräfte zum Lösen des Deckels erheblich, sodass dieser sich im Gegensatz zu bekannten Deckeln auch nach Jahren noch leicht bzw. mit geringem Kraftaufwand lösen lässt. Die Fase ist bevorzugt derart ausgebildet, dass der Anpressdruck auf die O-Ringdichtung mit zunehmender Verschlussrotationsbewegung des Deckels zunimmt. Bevorzugt vergrößert sich ein Innenumfangsradius des Deckels im Bereich der Anlagefase mit geringer werdendem Abstand zur Mantelfläche des Luftführungsrohres. Bevorzugt verjüngt sich die Materialstärke des Kragenabschnittes zur Ausbildung der Fase in Richtung Mantelfläche des Luftführungsrohres. Dies wiederum ermöglicht eine bevorzugte Ausgestaltung des Deckels mit einer außenzylindrischen Hüllkontur des Kragenabschnittes auch im Bereich außerhalb der krageninnenseitigen Anlagefase für die Ringdichtung.

Als besonders zweckmäßig hat es sich dabei herausgestellt, wenn die Ringdichtung in einer Ringnut an der der Innenseite des Kragenabschnittes zugewandten Außenseite des Verschlussstutzens aufgenommen ist.

Bevorzugt überragt das vorzugsweise als Muffenrohr ausgebildete Abgasrohr das Luftführungsrohr zu beiden Axial-, d.h. Längserstreckungsseiten.

Bevorzugt ist eine Ausführungsform der Rohreinheit, bei der sich das Luftführungsrohr mit monolithisch mit dem Luftführungsrohr ausgebildeten Distanzmitteln, insbesondere in Umfangsrichtung beabstandeten Distanzelementen, von denen weiter bevorzugt zumindest eines federnd ausgebildet ist, in radialer Richtung am Außenumfang des Abgasrohres abstützt.

Um den Verschlussdeckel durch den Verschlussvorgang in Richtung der Mantelseite des Luftführungsrohres bzw. die äußere Stirnseite des Verschlussstutzens kraftzubeaufschlagen, ist in Weiterbildung der Erfindung mit Vorteil vorgesehen, dass die Bajonettelemente und/oder die Gegenbajonettelemente entsprechend abgeschrägt ausgebildet sind, d.h. eine Steigung aufweisen, um durch die Verschluss- bzw. Verdrehbewegung die erforderliche Kraftkomponente zu erzeugen. Durch Zusammenwirken der Phase mit der verschlussstutzenseitigen Ringdichtung kann somit gleichzeitig durch Verdrehbewegung die gewünschte, definierte Dichtungspressung der Ringdichtung in radialer Richtung gegen den Verschlussstutzen erreicht werden.

Als besonders zweckmäßig hat es sich herausgestellt, wenn zusätzlich zu der Bajonettverschlussverbindung, insbesondere zu dieser beabstandet Sicherungsmittel vorgesehen sind, mit denen der Verschlussdeckel gegen ein unbeabsichtigtes Öffnen gesichert ist. Anders ausgedrückt wird durch die Sicherungsmittel ein Widerstand erzeugt, der bewusst von einem Nutzer überwunden werden muss. Bevorzugt sind die Sicherungsmittel als Formschlussverbindung zwischen dem Verschlussdeckel und dem Verschlussstutzen realisiert, insbesondere derart, dass entsprechende Geometrieelemente senkrecht zur Rotationsrichtung beim Verschließen ineinandergreifen.

Um dem Monteur zu signalisieren, dass eine definierte, bevorzugt nicht zu überdrehende Endverschlussposition des Deckels auf dem Verschlussstutzen erreicht ist, ist es bevorzugt, entsprechende haptische Rückkopplungsmittel zur haptischen Signalisierung des Erreichens dieser Position vorzusehen. Diese werden bevorzugt von den vorerwähnten Sicherungsmitteln gebildet oder sind alternativ zusätzlich zu diesen vorgesehen. Die haptischen Rückkopplungsmittel können dadurch erreicht werden, dass ein Deckelabschnitt in eine entsprechende Ausnehmung am Verschlussstutzen bei Erreichen der Position einschnappt oder umgekehrt.

Bevorzugt ist nicht nur in dem Luftführungsrohr eine Kontrollöffnung vorgesehen, sondern radial beabstandet hierzu, durch die luftführungsrohrseitige Kontrollöffnung her zugänglich eine Kontrollöffnung im Abgasrohr, die wiederum von einem Abgasrohr-Verschlussdeckel verschlossen ist, der bevorzugt durch die Kontrollöffnung im Luftführungsrohr betätigbar und durch diese entnehmbar ist.

Die Erfindung führt auch auf ein System, umfassende eine nach dem Konzept der Erfindung ausgebildete Rohreinheit, die bevorzugt axial mit weiteren Rohreinheiten zur Luftführung und Abgasableitung verbunden sind. Bevorzugt umfasst die erfindungsgemäße Rohreinheit hierzu am Abgasrohr einen endseitigen Muffenabschnitt zum Einstecken eines Abgasrohres einer benachbarten Rohreinheit, umfassend ein Abgasrohr und ein Luftführungsrohr, beide bevorzugt ohne Kontrollöffnung.

Weitere Vorteile, Merkmale und Einzelheiten der Erfindung ergeben sich aus der nachfolgenden Beschreibung bevorzugter Ausführungsbeispiele sowie anhand der Figuren.

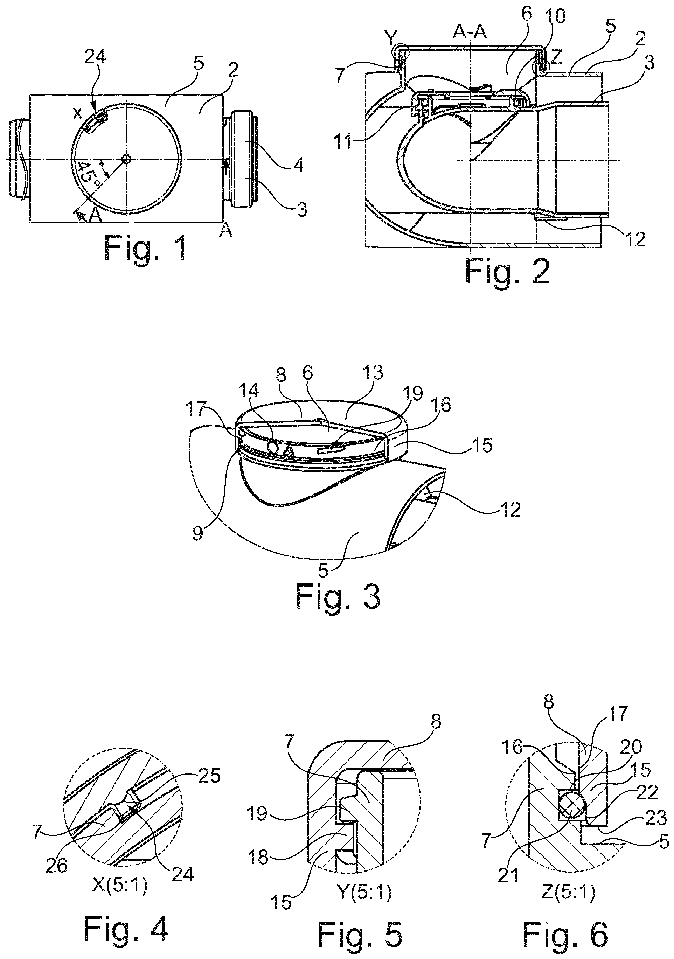

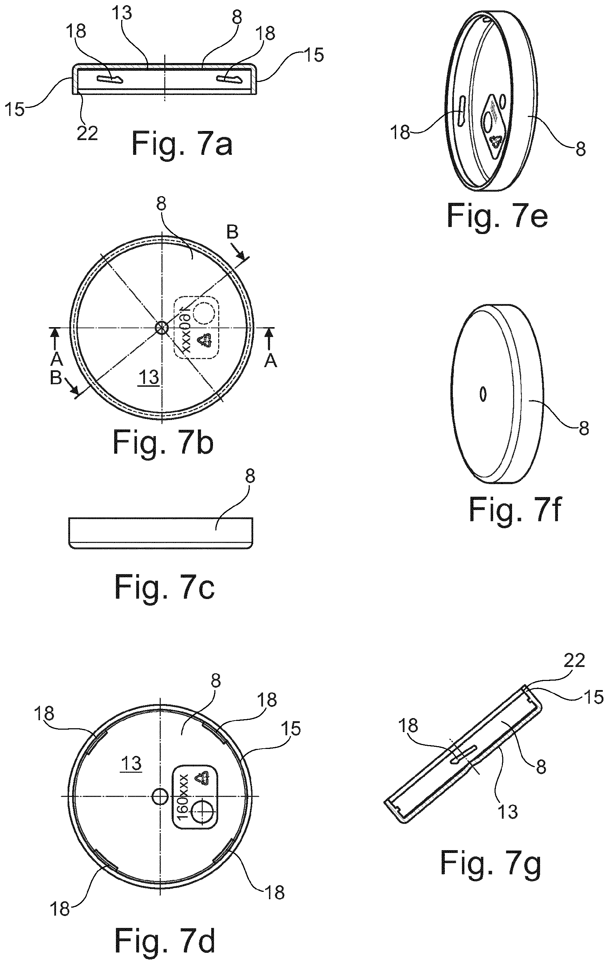

Diese zeigen in unterschiedlichen Darstellungen gemäß den Fig. 1 bis 6 ein bevorzugtes Ausführungsbeispiel einer erfindungsgemäßen Rohreinheit, sowie in den Fig. 7a - 7g in unterschiedlichen Darstellungen den Verschlussdeckel der vorgenannten Rohreinheit in Alleinstellung.

In den Figuren ist eine Rohreinheit 1 für Verbrennungseinrichtungen, insbesondere Gebäudeheizungen gezeigt. Die Rohreinheit 1 umfasst ein äußeres Luftführungsrohr 2 aus Kunststoff, in dem ein ebenfalls aus Kunststoff ausgebildetes Abgasrohr 3 angeordnet ist, welches, wie aus Fig. 1 ersichtlich ist, als Muffenrohr ausgestaltet ist und das Luftführungsrohr 2 zu beiden Axialseiten, d.h. Längserstreckungsseiten überragt. Das Abgasrohr 3 weist einen endseitigen Muffenabschnitt 4 mit nicht gezeigter, innenliegender, als Lippendichtung ausgebildeter Ringdichtung auf, wobei in den Muffenabschnitt ein Einsteckabschnitt einer benachbarten Rohreinheit eingesteckt werden kann. Zwei dann aneinander angrenzende Luftrohre können beispielsweise über eine äußere Abdichtschelle luftdicht verbunden werden.

Zu erkennen ist, dass in einer Mantelfläche 5 des Luftführungsrohres 2 eine Kontrollöffnung 6 angeordnet ist, die umgeben ist von einem radial von dem Luftführungsrohr 2 abragenden Verschlussstutzen 7 (Montagestutzen). Die Kontrollöffnung 6 ist mit einem einteiligen Verschlussdeckel 8 aus Kunststoff verschlossen, der über eine Bajonettverschlussverbindung 9 am Verschlussstutzen 7 fixiert ist.

Radial innerhalb bzw. unterhalb der Kontrollöffnung 6 befindet sich eine Abgaskontrollöffnung 10, die sich von einem Abgasverschlussdeckel 11 verschlossen ist, der bei entferntem Verschlussdeckel durch die Kontrollöffnung 6 im Luftführungsrohr 2 zugänglich ist. Kontrollöffnung 6 und Abgaskontrollöffnung 10 fluchten in radialer Richtung.

Das Luftführungsrohr 2 stützt sich in radialer Richtung nach innen über ein einteilig mit dem Luftführungsrohr 2 ausgebildete und lediglich in Fig. 2 abschnittsweise zu erkennende Distanzmittel 12 (Abstützmittel) am Außenumfang des Abgasrohres 3 ab.

Der in den Figuren 7a bis 7g in Alleinstellung gezeigte Verschlussdeckel 8 der Rohreinheit 1 gemäß den Fig. 1 bis 6 umfasst einen geschlossenen Deckelabschnitt 13, der die eigentliche Kontrollöffnung 6 benachbart zum radial äußeren bzw. freien Ende, d.h. zur Stirnseite 14 des Verschlussstutzens 7 verschließt. Von dem Deckelabschnitt 13 kragt senkrecht ein außenzylindrischer Kragenabschnitt 15 ab, der den Verschlussstutzen 7 an seiner Außenseite 16 übergreift, so dass sich die Außenseite 15 des Verschlussstutzens 7 und eine Innenseite des Kragenabschnittes 15 gegenüberliegen. Kragenabschnitt 15 und Deckelabschnitt 13 sind monolithisch ausgebildet.

An der Innenseite 17 sind monolithisch mit dem Kragenabschnitt 15 und in Umfangsrichtung gleichmäßig beabstandete Bajonettelemente 18 (hier beispielhaft vier Stück) ausgebildet, die sich in Umfangsrichtung erstrecken und die mit an der Außenseite 16 des Kragenabschnittes 15 angeordneten Gegenbajonettelementen 19 in der Art eines Bajonettverschlusses zusammenwirken, wozu die Bajonettelemente 18 die Gegenbajonettelemente 19 auf der der Mantelfläche 5 des Luftführungsrohres 2 zugewandten Seite hintergreifen. Zu erkennen ist, dass die Gegenbajonettelemente 19 als Steigungsabschnitte ausgebildet sind und somit eine Kraftkomponente auf den Verschlussdeckel 8 bei einer Schließrotationsbewegung in Richtung Mantelfläche 5 erzeugen.

Aus einer Zusammenschau der Fig. 2 und 6 ist ersichtlich, dass in einer an der Außenseite 16 des Verschlussstutzen 7 vorgesehenen Ringnut 20, eine als O-Ringdichtung ausgebildete Ringdichtung 21 angeordnet ist, die sich bei verschlossenem Verschlussdeckel 8 radial zwischen der Außenseite 16 des Verschlussstutzens 7 und der gegenüberliegenden Innenseite 17 des Verschlussdeckels 8 befindet. Die Ringdichtung 21 wird nach innen bzw. gegen den Verschlussstutzen 7 gepresst von einer Anlagefase 22, die an der Innenseite, d.h. am Innenumfang des Kragenabschnittes 15 des Verschlussdeckels 8 ausgebildet ist. Die Fasenfläche verläuft damit mit abnehmendem Abstand zur Mantelfläche weiter von dem Muffenabschnitt weg, so dass der Anpressdruck auf die Ringdichtung 21 mit zunehmender Verschlussrotationsbewegung zunimmt. An seinem Außenumfang ist der Kragenabschnitt 15 auch im Bereich außerhalb der innen angeordneten Anlagefase 22 zylindrisch - lediglich die Materialstärke nimmt in Richtung des freien Endes 23 des Kragenabschnittes 15 ab.

Die Ringdichtung 21 befindet sich dabei unterhalb der Bajonettverschlussverbindung 9, d.h. in Richtung hin zur Mantelfläche 5 des Luftführungsrohres 2 versetzt, um somit mit der endseitigen Anlagefase 22 an der Innenseite des Verschlussdeckels 8 zusammenwirken zu können.

Fig. 4 zeigt ein Detail aus einem in Fig. 1 aufgeschnitten dargestellten Bereich. Zu erkennen sind zusätzlich zu den Bajonettverschlussmitteln realisierte Sicherungsmittel 24, die als Formschlussmittel ausgebildet sind und gleichzeitig haptische Rückkopplungsmittel bilden, die das Erreichen einer definierten Verschlussposition haptisch signalisieren, indem eine nach innen in Richtung Verschlussstutzen 7 ragende Erhebung 25 in eine dieser zugeordnete, gegenüberliegende Vertiefung 26 an der Außenseite des Verschlussstutzens 7 einschnappt.

### Bezugszeichenliste

- 1: Rohreinheit
- 2: Luftführungsrohr
- 3: Abgasrohr
- 4: Muffenabschnitt
- 5: Mantelfläche des Luftführungsrohrs
- 6: Kontrollöffnung
- 7: Verschlussstutzen
- 8: Verschlussdeckel
- 9: Bajonettverschlussverbindung
- 10: Abgasrohrkontrollöffnung
- 11: Abgasrohrverschlussdeckel
- 12: Distanzmittel
- 13: Dichtabschnitt
- 14: Stirnseite des Verschlussstutzens
- 15: Kragenabschnitt
- 16: Außenseite
- 17: Innenseite
- 18: Bajonettelemente
- 19: Gegenbajonettelemente
- 20: Ringnut
- 21: Ringdichtung
- 22: Anlagefase
- 23: freies Ende
- 24: Sicherungsmittel
- 25: Erhebung
- 26: Vertiefung

## Patentansprüche

1. Rohreinheit (1), umfassend ein Abgasrohr (3) aus Kunststoff zur Abführung von Verbrennungsgasen von einer Verbrennungseinrichtung, insbesondere von einer Gebäudeheizung, welches innerhalb eines Luftführungsrohr (2) angeordnet ist, das zusammen mit dem Außenumfang des Abgasrohres (3) einen Ringluftkanal zur Versorgung der Verbrennungseinrichtung mit Luft begrenzt, wobei mantelseitig in dem Luftführungsrohr (2) eine Kontrollöffnung (6) vorgesehen ist, die mit einem an einem die Kontrollöffnung (6) umgebenden, radial vorstehenden Verschlussstutzen (7) lösbar fixierten Verschlussdeckel (8) aus Kunststoff verschlossen ist, der den Verschlussstutzen (7) an seinem Außenumfang mit einem monolithisch mit einem geschlossenen Deckelabschnitt (13) ausgebildeten und von diesem abkragenden Kragenabschnitt (15) übergreift, wobei zwischen dem Verschlussdeckel (8) und dem Luftführungsrohr (2) eine lösbare Bajonettverschlussverbindung (9) realisiert ist, umfassend monolithisch mit dem Verschlussdeckel (8) an einer Innenseite (17) seines Kragenabschnittes (15) ausgebildete und in Umfangsrichtung beabstandete Bajonettelemente (18), die diesen zugeordnete, monolithisch mit dem Luftführungsrohr (2) an einer Außenseite (16) des Verschlussstutzens (7) ausgebildete Gegenbajonettelemente (19) hintergreifen und dass radial zwischen der Innenseite (17) des Kragenabschnitts (15) und der Außenseite (16) des Verschlussstutzens (7), bevorzugt entlang der Radialerstreckung des Verschlussstutzens (7) zwischen der Bajonettverschlussverbindung (9) und der Mantelfläche (5) des Luftführungsrohres (2), eine als O-Ringdichtung ausgebildete Ringdichtung (21) angeordnet ist, und dass der Kragenabschnitt (15) endseitig an der Innenseite (17) eine Anlagefase (22) zum Pressen der Ringdichtung (21) aufweist.

2. Rohreinheit nach Anspruch 1,
**dadurch gekennzeichnet,**
**dass** die Ringdichtung (21) in einer an der Außenseite (16) des Verschlussstutzens (7) ausgebildeten Ringnut (20) angeordnet ist.

3. Rohreinheit nach einem der vorhergehenden Ansprüche,
**dadurch gekennzeichnet,**
**dass** sich der Kragenabschnitt (15) in Richtung seines dem Luftführungsrohr (2) zugewandten Endes materialstärkenmäßig verjüngt.

4. Rohreinheit nach einem der vorhergehenden Ansprüche,
**dadurch gekennzeichnet,**
**dass** die Außenseite (16) des Verschlussstutzens (7) zylindrisch ist, insbesondere auch im Bereich außerhalb der auf der Kragenabschnittsinnenseite angeordneten Anlagefase (22).

5. Rohreinheit nach einem der vorhergehenden Ansprüche,
**dadurch gekennzeichnet,**
**dass** die Bajonettelemente (18) und/oder die Gegenbajonettelemente (19) abgeschrägt ausgebildet sind, wodurch der Verschlussdeckel (8) in Richtung Stirnseite (14) des Verschlussstutzens (7) verspannt ist.

6. Rohreinheit nach einem der vorhergehenden Ansprüche,
**dadurch gekennzeichnet,**
**dass** zusätzlich zu der Bajonettverschlussverbindung, bevorzugt als Formschlussverbindung zwischen dem Verschlussdeckel (8) und dem Verschlussstutzen (7) ausgebildete, lösbare Sicherungsmittel (24) zum Sichern des Verschlussdeckels (7) gegen ein unbeabsichtigtes Öffnen vorgesehen sind.

7. Rohreinheit nach einem der vorhergehenden Ansprüche,
**dadurch gekennzeichnet,**
**dass** bevorzugt von den Sicherungsmitteln (24) gebildete haptische Rückkopplungsmittel zur haptischen Signalisierung des Erreichens einer Soll-Verschlussdrehposition des Verschlussdeckels (8) relativ zu dem Verschlussstutzen (7) vorgesehen sind.

8. Rohreinheit nach einem der Ansprüche 6 oder 7,
**dadurch gekennzeichnet,**
**dass** die Sicherungsmittel eine, bevorzugt von den Bajonettelementen (18) und/oder den Gegenbajonettelementen (19) beabstandete, auf den Verschlussdeckel (8) und den Verschlussstutzen (7) aufgeteilte, radiale Erhebungs- und Vertiefungskombination (25, 26) umfassen, die in einer Sicherungsposition radial ineinandergreifen.

9. Rohreinheit nach einem der vorhergehenden Ansprüche,
**dadurch gekennzeichnet,**
**dass** in dem Abgasrohr (3) eine mit einem Abgasrohrverschlussdeckel (11) verschlossene Abgasrohrkontrollöffnung (10) angeordnet ist, die in radialer Richtung mit der Kontrollöffnung (6) im Luftführungsrohr (2) fluchtet.

10. System, umfassend eine Verbrennungseinrichtung, insbesondere eine Gebäudeheizung, sowie mindestens eine Rohreinheit (1) nach einem der vorhergehenden Ansprüche, über die die Verbrennungseinrichtung mit Luft versorgbar ist und über die Verbrennungsabgase ableitbar sind.

## Claims

1. A tube unit (1), comprising a plastic exhaust tube (3) for discharging combustion gases from combustion equipment, in particular from a building heating, said exhaust tube (3) being arranged inside an air duct tube (2) which delimits a circular air duct in conjunction with the outer perimeter of the exhaust tube (3) so as to supply the combustion equipment with air, a regulating opening (6) being provided in the air duct tube (2) on the side of the sheath, said regulating opening (6) being sealed by means of a plastic sealing cap (8), which is detachably fixed to a sealing neck (7) surrounding the regulating opening (6) and protruding radially and which engages over the sealing neck (7) at its outer perimeter via a collar section (15) formed monolithically with a sealed cap section (13) and jutting out therefrom, a detachable bayonet connection (9) being realized between the sealing cap (8) and the air duct tube (2) and comprising bayonet elements (18), which are formed monolithically with the sealing cap (8) at an inside (17) of its collar section (15) and which are distanced in the peripheral direction and which engage behind counter-bayonet elements (19) allocated to the bayonet elements (18) and formed monolithically with the air duct tube (2) at an outside (16) of the sealing neck (7), a ring seal (21) realized as an O-ring seal being arranged radially between the inside (17) of the collar section (15) and the outside (16) of the sealing neck (7), preferably along the radial extension of the sealing neck (7) between the bayonet connection (9) and the sheath surface (5) of the air duct tube (2), and said collar section (15) comprising an abutting chamfer (22) on the inside (17) on its end so as to compress the ring seal (21).

2. The tube unit according to claim 1,
**characterized in that**
the ring seal (21) is arranged in an annular groove (20) formed on the outside (16) of the seal connection (7).

3. The tube unit according to any one of the preceding claims,
**characterized in that**
the material thickness of the collar section (15) becomes tapered towards the end facing towards the air duct tube (2).

4. The tube unit according to any one of the preceding claims,
**characterized in that**
the outside (16) of the sealing neck (7) is cylindrical, in particular also in the area outside of the abutting chamfer (22) arranged on the inside of the collar section (15).

5. The tube unit according to any one of the preceding claims,
**characterized in that**
the bayonet elements (18) and/or the counter-bayonet elements (19) are beveled, whereby the sealing cap (8) is tensioned towards the front side (14) of the sealing neck (7).

6. The tube unit according to any one of the preceding claims,
**characterized in that**
additionally to the bayonet connection, detachable securing means (24), preferably realized as a form-fit connection between the sealing cap (8) and the sealing neck (7), are provided so as to secure the sealing cap (7) against being unintentionally opened.

7. The tube unit according to any one of the preceding claims,
**characterized in that**
haptic feedback means, which are preferably formed by the securing means (24), are provided so as to haptically signal when an intended sealing rotational position of the sealing cap (8) has been attained with respect to the sealing neck (7).

8. The tube unit according to claim 6 or 7,
**characterized in that**
the securing means comprise a radial inclining and declining combination (25, 26), which radially engage into each other in a securing position and which are preferably distanced to the bayonet elements (18) and/or the counter-bayonet elements (19) and are distributed on the sealing cap (8) and the sealing neck (7).

9. The tube unit according to any one of the preceding claims,
**characterized in that**
an exhaust tube regulating opening (10) sealed by an exhaust tube sealing cap (11) is arranged in the exhaust tube (3) and aligns flush with the regulating opening (6) in the air duct tube (2) in the radial direction.

10. A system, comprising combustion equipment, in particular a building heating, as well as at least one tube unit (1) according to any one of the preceding claims, via which the combustion equipment is supplied with air and via which combustion gases are discharged.

## Revendications

1. Unité de tuyau (1), comprenant un tuyau de gaz d'échappement (3) fait de plastique pour décharger des gaz d'échappement d'un équipement de combustion, en particulier d'un chauffage de bâtiment, ledit tuyau de gaz d'échappement (3) étant disposé dans un tuyau de guidage d'air (2) qui limite un conduit d'air circulaire en combinaison avec le périmètre extérieur du tuyau de gaz d'échappement (3) afin d'aérer l'équipement de combustion, une ouverture de contrôle (6) étant prévue dans le tuyau de guidage d'air (2) sur le côté d'enveloppe, ladite ouverture de contrôle (6) étant étanchée au moyen d'un capuchon d'étanchéité (8), qui est fait de plastique et qui est fixé dans une manière détachable à une tubulure d'étanchéité (7) entourant l'ouverture de contrôle (6) et saillant radialement et qui s'engage sur la tubulure d'étanchéité (7) à son périmètre extérieur par une partie de collier (15) formée de manière monolithique avec une partie de capsule (13) étanchée et en saillant, une fermeture de baïonnette (9) détachable étant réalisée entre le capuchon d'étanchéité (8) et le tuyau de guidage d'air (2) et comprenant des éléments de baïonnette (18), qui sont réalisés de manière monolithique avec le capuchon d'étanchéité (8) à un intérieur (17) de sa partie de collier (15) et qui sont espacés dans la direction périphérique et qui s'engagent au-derrière des contre-éléments de baïonnette (19) attribués aux éléments de baïonnette (18) et formés de manière monolithique avec le tuyau de guidage d'air (2) à un extérieur (16) de la tubulure d'étanchéité (7), une bague d'étanchéité (21) réalisée en tant que joint torique étant disposé radialement entre l'intérieur (17) de la partie de collier (15) et l'extérieur (16) de la tubulure d'étanchéité (7), préférablement le long de l'extension radiale de la tubulure d'étanchéité (7) entre la fermeture de baïonnette (9) et la surface d'enveloppe (5) du tuyau de guidage d'air (2), et ladite partie de collier (15) comprenant un biseau d'appui (22) sur l'intérieur (17) sur son extrémité afin de comprimer la bague d'étanchéité (21).

2. Unité de tuyau selon la revendication 1,
**caractérisé en ce que**
la bague d'étanchéité (21) est disposée dans une rainure annulaire (20) réalisée sur l'extérieur (16) de la tubulure d'étanchéité (7).

3. Unité de tuyau selon l'une quelconque des revendications précédentes,
**caractérisé en ce que**
l'épaisseur de matière de la partie de collier (15) se rétrécit en direction de l'extrémité tourné vers le tuyau de guidage d'air (2).

4. Unité de tuyau selon l'une quelconque des revendications précédentes,
**caractérisé en ce que**
l'extérieur (16) de la tubulure d'étanchéité (7) est cylindrique, en particulier aussi dans la zone en dehors du biseau d'appui (22) disposé sur l'intérieur de la partie de collier (15).

5. Unité de tuyau selon l'une quelconque des revendications précédentes,
**caractérisé en ce que**
les éléments de baïonnette (18) et/ou les contre-éléments de baïonnette (19) sont biseautés, moyennant quoi le capuchon d'étanchéité (8) est précontrainte vers le côté frontal (14) de la tubulure d'étanchéité (7).

6. Unité de tuyau selon l'une quelconque des revendications précédentes,
**caractérisé en ce que**
en plus de la fermeture de baïonnette, des moyens de fixation (24) détachables, préférablement réalisés en tant qu'accouplement mécanique entre le capuchon d'étanchéité (8) et la tubulure d'étanchéité (7), sont prévus afin de fixer le capuchon d'étanchéité (7) contre une ouverture par inadvertance.

7. Unité de tuyau selon l'une quelconque des revendications précédentes,
**caractérisé en ce que**
des moyens de rétroaction tactiles, qui sont réalisés préférablement par les moyens de fixation (24), sont prévus pour signaler de manière tactile quand une position de rotation étanchant envisagée du capuchon d'étanchéité (8) a été atteinte par rapport à la tubulure d'étanchéité (7).

8. Unité de tuyau selon la revendication 6 ou 7,
**caractérisé en ce que**
les moyens de fixation comprennent une combinaison d'inclination de de déclination radiale (25, 26), qui s'engagent radialement les unes dans les autres dans une position de sécurité et qui est espacée préférablement des éléments de baïonnette (18) et/ou des contre-éléments de baïonnette (19) et est distribuée sur le capuchon d'étanchéité (8) et la tubulure d'étanchéité (7).

9. Unité de tuyau selon l'une quelconque des revendications précédentes,
**caractérisé en ce que**
une ouverture de contrôle de tuyau de gaz d'échappement (10) étanchée par un capuchon d'étanchéité de tuyau de gaz d'échappement (11) est disposée dans le tuyau de gaz d'échappement (3) et est alignée en affleurement avec l'ouverture de contrôle (6) dans le tuyau de guidage d'air (2) dans la direction radiale.

10. Système, comprenant un équipement de combustion, en particulier un chauffage de bâtiment, ainsi qu'au moins une unité de tuyau (1) selon l'une quelconque des revendications précédentes, par laquelle l'équipement de combustion est aéré et par laquelle des gaz d'échappement sont déchargés.
